# EUROPÄISCHE PATENTANMELDUNG

(11) **EP 1 137 291 A2**
(43) Veröffentlichungstag der Anmeldung: **26.09.2001**
(21) Anmeldenummer: 01105999.5
(22) Anmeldetag: 10.03.2001
(51) Int. Cl.: H04N 9/29

(54) **Entmagnetisierungsschaltung**

(30) Priorität: 23.03.2000 DE 10014383
(71) Anmelder: Micronas Munich GmbH, 81541 München (DE)
(72) Erfinder: Preller, Peter, 81243 München (DE)
(74) Vertreter: Patentanwälte Westphal, Mussgnug & Partner

(57) **Zusammenfassung**

Zur Erzielung eines gewünschten Verlaufs des Entmagnetisierungsstroms (I1) und einer möglichst geringen Verlustleistung im Dauerbetrieb eines Farbfernsehgeräts wird eine Entmagnetisierungsschaltung vorgeschlagen, bei der zum Steuern des Entmagnetisierungsstroms (I1) zwei über einen gemeinsamen oder zwei separate kapazitive Spannungsteiler (C1-C4) angesteuerte Transistoren (T1, T2) vorgesehen sind. An die kapazitiven Spannungsteiler (C1-C4) wird eine gleichgerichtete Wechselspannung angelegt. Der durch die Transistoren (T1, T2) gesteuerte Entmagnetisierungsstrom (I1) wird einer Entmagnetisierungswicklung (R4) zugeführt.

## Beschreibung

Die vorliegende Erfindung betrifft eine Entmagnetisierungsschaltung nach dem Oberbegriff des Anspruches 1, die insbesondere zur Entmagnetisierung von Farbbildröhren verwendbar ist.

Farbbildröhren müssen entmagnetisiert werden, um eine ausreichende Farbreinheit zu erzielen. Zu diesem Zweck wird eine Entmagnetisierungswicklung verwendet, durch die beim Einschalten des entsprechenden Geräts ein abklingender Netzwechselstrom hoher Amplitude geschickt wird. Der durch die Entmagnetisierungswicklung während des Dauerbetriebs des Geräts fließende Reststrom soll hingegen möglichst gering sein, um die Verlustleistung zu begrenzen.

In herkömmlichen Entmagnetisierungsschaltungen wird zur Erzielung der abnehmenden Amplitude des Netzwechselstroms ein in Serie mit der Entmagnetisierungswicklung geschalteter PTC-Widerstand ('Positive Temperature Coefficient') verwendet. Bei dem PTC-Widerstand handelt es sich um einen Widerstand mit einem temperaturabhängigen Widerstandswert, wobei insbesondere der Widerstandswert mit zunehmender Temperatur ansteigt. Der Widerstandswert des PTC-Widerstands ist somit beim Einschalten des entsprechenden Geräts, d.h. im kalten Zustands, sehr gering, während er im betriebswarmen Zustand wesentlich höher ist.

Die Verwendung des PTC-Widerstands ist jedoch insofern nachteilig, als daß der während des Dauerbetriebs des jeweiligen Geräts über die Entmagnetisierungswicklung und den PTC-Widerstand fließende Reststrom eine Dauerverlustleistung von ca. 2W verursacht. Dies ist insbesondere im Standby-Betrieb störend, da gerade hier die Aufnahmeleistung besonders niedrig sein soll. Bei teuren Fernsehgeräten wird daher der Entmagnetisierungsstrom, d.h. der über die Entmagnetisierungswicklung und den PTC-Widerstand fließende Strom, im Dauerbetriebs mit zusätzlichem Schaltungsaufwand (beispielsweise mittels eines Triacs oder eines Optokopplers) ausgeschaltet.

Der vorliegenden Erfindung liegt die Aufgabe zugrunde, eine Entmagnetisierungsschaltung bereit zu stellen, bei welcher mit geringem schaltungstechnischem Aufwand der gewünschte Stromverlauf erzielt werden kann, ohne daß im Dauerbetrieb eine nennenswerte Verlustleistung auftritt.

Diese Aufgabe wird erfindungsgemäß durch eine Entmagnetisierungsschaltung mit den Merkmalen des Anspruches 1 gelöst. Die Unteransprüche definieren vorteilhafte und bevorzugte Ausführungsformen der vorliegenden Erfindung.

Die erfindungsgemäße Entmagnetisierungsschaltung verwendet keinen PTC-Widerstand, sondern MOS- oder Bipolar-Leistungstransistoren. Mit einem geringen Ansteueraufwand kann somit nicht nur ein Entmagnetisierungsstrom mit abklingender Amplitude erzeugt werden, sondern der Entmagnetisierungsstrom geht nach der Entmagnetisierung ganz auf Null zurück, so daß nach einer Entmagnetisierung keine Verlustleistung auftritt, was insbesondere im Standby-Betrieb des jeweiligen Geräts vorteilhaft ist.

Die Ansteuerung der Transistoren erfolgt über kapazitive Schaltungsmittel, welche insbesondere in Form eines für beide Transistoren gemeinsam vorgesehenen kapazitiven Spannungsteilers oder in Form zweier separater kapazitiver Spannungsteiler ausgestaltet sein können. Dabei wird auch in idealer Weise die bei MOS-Transistoren meist vorhandene Inversdiode ausgenutzt. Bei Verwendung von Bipolar-Transistoren, die nicht mit derartigen Inversdioden ausgestattet sind, müssen diese zusätzlich vorgesehen werden.

Der beim eingangs beschriebenen Stand der Technik vorgesehene PTC-Widerstand kann durch einen strombegrenzenden Festwiderstand ersetzt werden.

Gemäß einem Ausführungsbeispiel der vorliegenden Erfindung kann der Ansteueraufwand weiter reduziert werden, wenn die Source- und Gate-Anschlüsse der beiden MOS-Transistoren miteinander verbunden werden, so daß die Entmagnetisierungsschaltung mit lediglich einem kapazitiven Spannungsteiler betrieben werden kann.

Gemäß einem weiteren Ausführungsbeispiel der vorliegenden Erfindung wird eine Entmagnetisierungsschaltung vorgeschlagen, die auch nach dem Einschalten des entsprechenden Geräts eine nachträgliche Betätigung oder Aktivierung der Entmagnetisierung ermöglicht, so daß auch im Dauerbetrieb des jeweiligen Geräts eine Entmagnetisierung durchgeführt werden kann. Dies ist insbesondere dann wünschenswert, wenn das entsprechende Gerät längere Zeit am Netz bleibt und außerhalb der Betriebszeiten lediglich auf Standby geschaltet wird.

Bei diesem Ausführungsbeispiel wird ein weiterer Transistor, insbesondere ein Kleinsignaltransistor, verwendet, wobei an diesen weiteren Transistor zum Betätigen einer weiteren Entmagnetisierung eine entsprechende Spannung angelegt werden muß, die diesen Transistor in den leitenden Zustand schaltet. Dies kann beispielsweise durch eine Spannung geschehen, die im Standby-Zustand des Geräts niedrig und im Betriebszustand hoch ist.

Die Erfindung eignet sich insbesondere zur Entmagnetisierung von Farbbildröhren entsprechender Fernsehgeräte. Die Erfindung ist jedoch nicht auf diesen Anwendungsbereich beschränkt, sondern kann allgemein überall dort angewendet werden, wo eine Entmagnetisierung mit Hilfe einer Entmagnetisierungswicklung durchzuführen ist.

Die Erfindung wird nachfolgend näher unter Bezugnahme auf die beigefügte Zeichnung anhand bevorzugter Ausführungsbeispiele erläutert.
Fig. 1 zeigt den Aufbau einer Entmagnetisierungsschaltung gemäß einem ersten Ausführungsbeispiel der vorliegenden Erfindung,
Fig. 2 zeigt verschiedene Spannungspotentialverläufe sowie den Verlauf des Entmagnetisierungsstroms bei dem in Fig. 1 gezeigten Ausführungsbeispiel,
Fig. 3 zeigt den Aufbau einer Entmagnetisierungsschaltung gemäß einem zweiten Ausführungsbeispiel der vorliegenden Erfindung,
Fig. 4 zeigt den Aufbau einer Entmagnetisierungsschaltung gemäß einem dritten Ausführungsbeispiel der vorliegenden Erfindung, und
Fig. 5 zeigt den Aufbau einer Entmagnetisierungsschaltung gemäß einem vierten Ausführungsbeispiel der vorliegenden Erfindung.

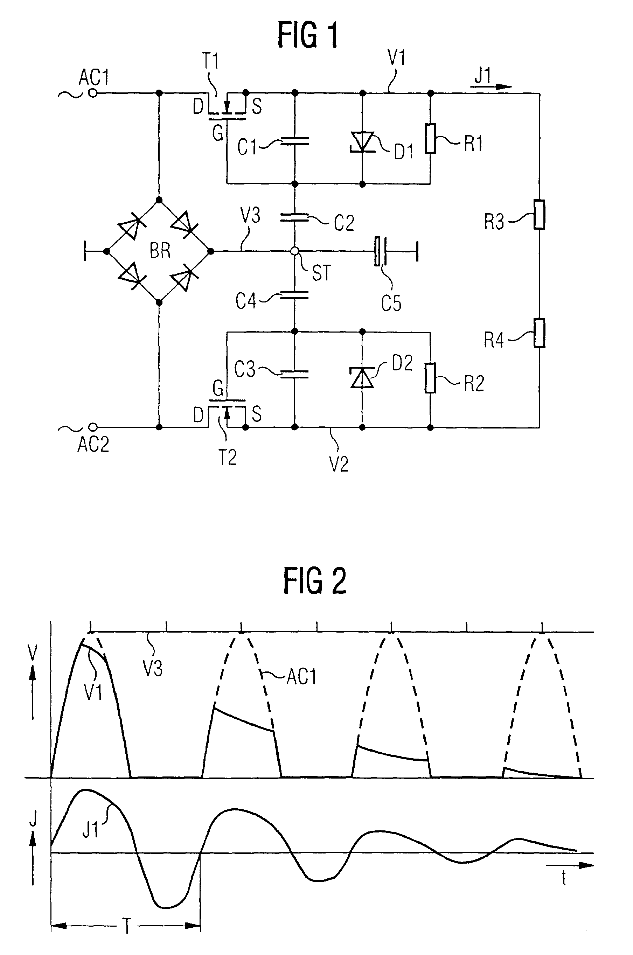

In Fig. 1 ist ein Ausführungsbeispiel der vorliegenden Erfindung dargestellt, bei dem zum Steuern des Entmagnetisierungsstroms zwei MOS-Leistungstransistoren vorgesehen sind.

Die Entmagnetisierungsschaltung weist zwei Anschlüsse AC1 und AC2 zum Anlegen einer Netzwechselspannung auf. Zwischen die beiden Anschlüsse AC1 und AC2 ist eine Serienschaltung aus einem ersten MOS-Leistungstransistor T1, zwei Widerständen R3 und R4 sowie einem zweiten MOS-Leistungstransistor T2 geschaltet. Der Widerstand R3 dient zur Strombegrenzung, während der Widerstand R4 dem ohmschen Ersatzwiderstand einer zur Entmagnetisierung vorgesehenen Entmagnetisierungswicklung entspricht. Die Drain-Anschlüsse der beiden Transistoren T1 und T2 sind in Fig. 1 mit D, die Source-Anschlüsse mit S und die Gate-Anschlüsse mit G bezeichnet.

Die beiden Transistoren T1 und T2 werden jeweils über einen kapazitiven Spannungsteiler C1, C2 bzw. C3, C4 angesteuert. Die Kondensatoren C2 und C4 sind jeweils mit einem Steueranschluß ST verbunden, während der Kondensator C1 bzw. C3 den Gate-Anschluß G und den Source-Anschluß S des Transistors T1 bzw. T2 verbindet. Zu dem Kondensator C1 bzw. C3 ist eine Begrenzungsdiode D1 bzw. D2 sowie ein Entladewiderstand R1 bzw. R2 parallel geschaltet.

Mit dem Steueranschluß ST ist der Ausgang eines Brückengleichrichters BR verbunden, dessen Eingänge mit den beiden Anschlüssen AC1 und AC2 verbunden sind. Der Brückengleichrichter BR gewährleistet, daß an den Steueranschluß ST ausschließlich positive Netzhalbwellen angelegt werden. Mit dem Steueranschluß ST ist zudem ein Elektrolytkondensator C5 verbunden, dessen anderes Ende an Masse angeschlossen ist. Dieser Elektrolytkondensator dient dazu, die durch den Brückengleichrichter BR gleichgerichtete Spannung zu glätten. Sowohl der Brückengleichrichter BR als auch der Elektrolytkondensator C5 sind Bestandteil eines Netzgeräts, welches an die Entmagnetisierungsschaltung wie in Fig. 1 gezeigt anzuschließen ist.

Die Funktion der in Fig. 1 gezeigten Entmagnetisierungsschaltung wird nachfolgend unter Bezugnahme auf Fig. 2 zunächst für den Anschluß AC1 bzw. den Transistor T1 erläutert. In Fig. 2 ist der Verlauf des über die Entmagnetisierungswicklung R4 fließenden Entmagnetisierungsstroms I1 sowie der in Fig. 1 gezeigten Spannungspotentiale V1 und V3 in Bezug auf die am Anschluß AC1 anliegenden Netzhalbwellen dargestellt.

Beim Einstecken des Netzteils wird der Elektrolytkondensator C5 sofort auf den Scheitelwert der Netzspannung aufgeladen. Beim nächsten Nulldurchgang der Netzspannung ist der Transistor T1 zunächst leitend, da durch den zwischen dem Source-Anschluß S des Transistors T1 und dem Pluspol des Elektrolytkondensators C5 liegenden kapazitiven Spannungsteiler C1 und C2 der Gate-Anschluß G des Transistors T1 positiv gegenüber dem Source-Anschluß S vorgespannt ist. Die Gate-Source-Spannung Vgs des Transistors T1 beträgt (bei Vernachlässigung der Wirkung der Begrenzungsdiode D1) Vgs = V3 * C2/(C1+C2).

Die Begrenzungsdiode D1 schützt vor Überschreiten der zugelassenen Gate-Source-Spannung und gewährleistet unabhängig von der Höhe der jeweiligen Netzspannung ein gleichbleibendes Ausschwingverhalten, wobei sich die Stromamplitude des Entmagnetisierungsstroms von einer Halbwelle zur anderen reduziert.

Die Kondensatoren C1 und C2 sollten derart bemessen sein, daß der Transistor T1 bereits bei der kleinsten Netzspannung, bei der das jeweilige Gerät laufen soll, voll durchgesteuert werden kann.

Steigt nun während einer Netzhalbwelle die am Anschluß AC1 anliegende Spannung bis zu ihrem Scheitelwert an, verringert sich die Gate-Source-Spannung des Transistors T1, da die Spannung über dem kapazitiven Spannungsteiler C1, C2 absinkt. Während des Netzmaximums hat die Spannung am Anschluß AC1 den Wert des Spannungspotentials V3 am Elektrolytkondensator C5 erreicht, da V3 dem Scheitelwert der am Anschluß AC1 anliegenden Spannung entspricht. Das Spannungspotential V1 erreicht hingegen nicht ganz den Scheitelwert, da der Transistor T1 kurz vor Erreichen des Scheitelwerts zu sperren beginnt. Die Spannung V1 stabilisiert sich auf einen Wert, bei dem der Transistor T1 gerade noch leitend gehalten wird. Der Entmagnetisierungsstrom I1 fließt in Vorwärtsrichtung durch den stromleitenden Pfad des Transistors T1 sowie über die Widerstände R3 und R4, während der Entmagnetisierungsstrom in Rückwärtsrichtung durch den Transistor T2 (durch die integrierte rückwärtsleitende Inversdiode) fließt.

Nach Überschreiten des Scheitelwerts der Netzspannung erniedrigt sich die am Anschluß AC1 anliegende Spannung wieder. Die Spannung V1 behält zunächst im wesentlichen ihren Wert. Erst wenn die am Anschluß AC1 anliegende Spannung kleiner als die Spannung V1 wird, wird der Transistor T1 wieder voll leitend, und die Spannung V1 fällt mit der am Anschluß AC1 anliegenden Spannung ab.

Der gleiche Vorgang wiederholt sich mit der nächsten Netzhalbwelle, wobei sich in diesem Fall der Vorgang in Bezug auf die am Anschluß AC2 anliegende Spannung im unteren Schaltungsbereich, d.h. in den Bauelementen T2, C3 und C4 sowie D2 und R2, abspielt. Die am Anschluß AC1 anliegende Spannung bleibt auf Null, während sich die am Anschluß AC2 anliegende Spannung gemäß einer Sinushalbwelle verändert.

Während der nachfolgenden Halbwellen wiederholen sich diese Vorgänge, wobei jedoch die Kondensatoren C1 bzw. C3 durch die Wiederstände R1 bzw. R2 allmählich entladen werden. Die Spannungen V1 und V2 steigen daher immer weniger weit an, so daß der durch die Widerstände R3 und R4 fließende Entmagnetisierungsstrom I1 allmählich abnimmt. Insbesondere nehmen die Spannungen V1 und V2 sowie der Entmagnetisierungsstrom I1 wie in Fig. 2 gezeigt exponentiell ab (in Fig. 2 ist lediglich V1 dargestellt), wobei die Periode T des Entmagnetisierungsstroms I1 bei einer 50Hz-Netzspannung 20ms beträgt. Auf diese Weise wird mit Hilfe der in Fig. 1 gezeigten Entmagnetisierungsschaltung der eingangs beschriebene gewünschte Verlauf des Entmagnetisierungsstroms I1 erzielt.

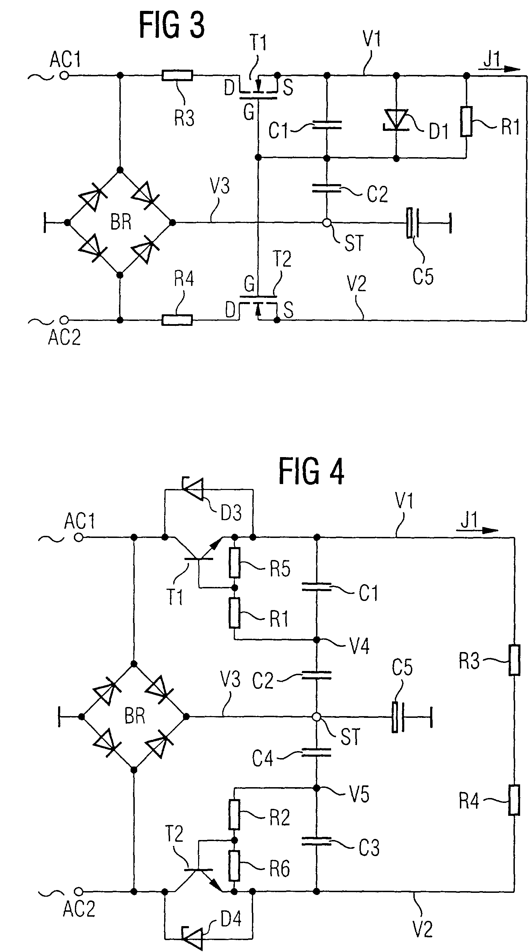

In Fig. 3 ist ein vereinfachtes Ausführungsbeispiel der vorliegenden Erfindung dargestellt.

Die Widerstände im Stromkreis, d.h. der strombegrenzende Widerstand R3 und der ohmsche Widerstand der Entmagnetisierungswicklung, sind gleichmäßig auf den oberen und unteren Schaltungsteil aufgeteilt (R3 = R4). Die Source- und Gate-Anschlüsse der beiden Transistoren T1 und T2 sind miteinander verbunden. Für beide Transistoren T1 und T2 ist ein gemeinsamer kapazitiver Spannungsteiler C1, C2 (mit zum Kondensator C1 parallel geschalter Begrenzungsdiode D1 und einem parallel geschalteten Entladewiderstand R1) vorgesehen, so daß der schaltungstechnische Aufwand für die Ansteuerschaltung gegenüber dem in Fig. 1 gezeigten Ausführungsbeispiel halbiert ist.

In Fig. 4 ist ein dem in Fig. 1 gezeigten Ausführungsbeispiel entsprechendes Ausführungsbeispiel dargestellt, wobei Bipolar-Transistoren anstelle von MOS-Transistoren verwendet werden. Falls die Bipolar-Transistoren nicht bereits wie de MOS-Transistoren rückwärtsleitende Inversdioden enthalten, müssen diese zusätzlich vorgesehen werden. Aus diesem Grund sind in Fig. 4 zusätzliche Dioden D3 und D4 mit den Bipolar-Transistoren T1 bzw. T2 verschaltet. Da Bipolar-Transistoren von Natur aus eine Begrenzung der Basisspannung aufweisen, kann im Gegensatz zu Fig. 1 und Fig. 2 zumindest im Netzspannungs-Schmalbereich auf die Begrenzungsdioden D1 und D2 verzichtet werden. Die in Fig. 4 zusätzlich vorgesehenen Widerstände R5 und R6 dienen als Spannungsteiler für die Basisspannung des jeweiligen Transistors T1 bzw. T2.

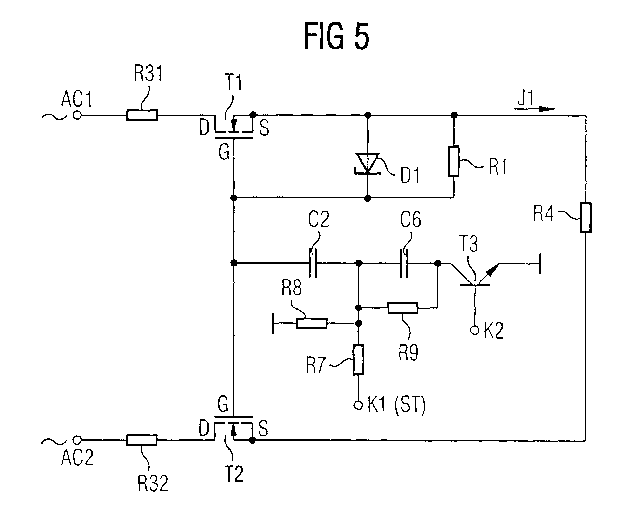

In Fig. 5 ist eine Entmagnetisierungsschaltung dargestellt, die auch nach dem Einschalten der Netzspannung eine nachträgliche Entmagnetisierung ermöglicht. Mit dieser Schaltung ist somit auch während der Betriebszeit des jeweiligen Geräts eine Entmagnetisierung möglich.

Bei dem in Fig. 5 gezeigten Ausführungsbeispiel sind die Strombegrenzungswiderstände R31 und R32 gleichmäßig auf den oberen und unteren Schaltungsteil aufgeteilt. Die Gate-Anschlüsse der beiden Transistoren T1 und T2 sind analog zu Fig. 3 miteinander verbunden. Der Stromkreis für den Entmagnetisierungsstrom I1 verläuft in einer entsprechenden Netzhalbwelle vom ersten Versorgungsspannungsanschluß AC1 über den ersten strombegrenzenden Widerstand R31, den ersten Transistor T1, die Entmagnetisierungswicklung bzw. deren ohmschen Widerstand R4, den zweiten Transistor T2 und den zweiten Strombegrenzungswiderstand R32 zu dem zweiten Versorgungsspannungsanschluß AC2. In der darauffolgenden Netzhalbwelle fließt der Strom I1 in umgekehrter Richtung.

Der Steuerteil, welcher das exponentielle Abklingen des Entmagnetisierungsstroms I1 sicherstellt, besteht bei diesem Ausführungsbeispiel lediglich aus dem Kondensator C2, dem Entladewiderstand R1 und der Begrenzungsdiode D1. Der Kondensator C1 ist nicht vorhanden, da die Gate-Source-Kapazitäten der beiden Transistoren T1 und T2 ausschließlich durch die parasitären Eingangskapazitäten dieser Transistoren gebildet sind.

In Fig. 5 ist der Übersichtlichkeit halber weder der Brückengleichrichter BR noch der Elektrolytkondensator C5 dargestellt. Als Steueranschluß ST dient bei diesem Ausführungsbeispiel eine Klemme K1, an die das Netzteil mit dem Verbindungspunkt zwischen dem Brückengleichrichter BR und dem Elektrolytkondensator C5 anzuschließen ist. Der Kondensator C2 ist im Gegensatz zu den vorhergehenden Ausführungsbeispielen dann nicht direkt mit dem Elektrolytkondensator C5 verbunden, sondern über einen zusätzlichen Widerstand R7.

Der Verbindungspunkt dieses Widerstands R7 mit dem Kondensator C2 ist über eine Serienschaltung aus einem weiteren Kondensator C6 und der Kollektor-Emitter-Strecke eines weiteren Transistors T3 mit Masse verbunden. Der Transistor T3 ist ein Kleinsignaltransistor, welcher allerdings bis ca. 300V spannungsfest sein muß. Zu dem Kondensator C6 ist ein weiterer Entladewiderstand R9 parallel geschaltet, wobei zwischen den Verbindungspunkt der Widerstände R7, R9 und Masse ein weiterer Widerstand R8 geschaltet ist.

Die Funktion der in Fig. 5 gezeigten Entmagnetisierungsschaltung ist wie folgt.

Im eingeschwungenen Zustand nach der ersten Entmagnetisierung, d.h. nach Einschalten der Netzspannung, sind die miteinander verbundenen Gate-Anschlüsse G der beiden MOS-Feldeffekttransistoren T1 und T2 auf das Source-Potential entladen, so daß die Transistoren T1 und T2 sperren und kein Entmagnetisierungsstrom I1 mehr fließt. Der Kollektor des Transistors T3 liegt an einer Spannung, die etwas geringer als die hohe Spannung am Steueranschluß bzw. an der Klemme K1 ist. Die Erniedrigung der Spannung geschieht durch den aus den Widerständen R7 und R8 gebildeten Spannungsteiler und gewährleistet, daß die zulässige Kollektorspannung des Transistors T3 nicht überschritten wird.

Soll zu einem späteren Zeitpunkt eine weitere Entmagnetisierung durchgeführt werden, muß der Transistor T3 durch Anlegen einer geeigneten Spannung an die Basisklemme K2 in den leitenden Zustand geschaltet werden. Bei der in Fig. 5 gezeigten Ausführungsform des Transistors T3 als npn-Transistor muß somit eine positive Spannung an die Klemme angelegt werden. Dies kann beispielsweise durch eine Spannung geschehen, die im Standby-Zustand niedrig und im Betriebszustand hoch ist. Zum Erzeugen dieser Spannung eignet sich besonders der Schaltnetzteil-Ansteuerbaustein TDA 16847, der einen Ausgang zur Leistungsmessung aufweist, an dem durch einfache Beschaltung eine leistungs-, aber nicht frequenz- und netzspannungsabhängige Spannung erzeugt werden kann.

Durch Einschalten des Transistors T3 wird dessen Kollektor nach Masse gezogen, wobei der so entstehende negative Spannungssprung über den Kondensator C6 übertragen wird, so daß das Spannungspotential am Verbindungspunkt der Kondensatoren C2 und C6 ebenfalls fast bis auf das Massepotential abfällt (da die Kapazitäten C2 und C6 mit C2 « C6 gewählt sind, wird die Spannung nur wenig kapazitiv heruntergeteilt). Der Spannungssprung wird jedoch auch über den Kondensator C2 auf die Gate-Anschlüsse G der beiden Transistoren T1 und T2 übertragen. Die Gate-Anschlüsse werden jedoch durch die Diode D1 auf Massepotential geklemmt. Der Kondensator C6 wird jetzt über den Widerstand R7 verhältnismäßig schnell geladen, so daß die Spannung am Verbindungspunkt der Kondensatoren C2 und C6 ansteigt. Dieser Spannungsanstieg wird durch den kapazitiven Spannungsteiler, der durch den Kondensator C2 und die parasitären Gate-Kapazitäten der Transistoren T1 und T2 gebildet ist, auf die Gate-Anschlüsse G der beiden Transistoren übertragen. Ein Überschreiten der zulässigen Gate-Spannung wird durch die begrenzende Zenerdiode D1 vermieden. Die Transistoren T1 und T2 sind jetzt leitend und es läuft ein Entmagnetisierungsvorgang ab, wie er zuvor bereits beschrieben worden ist.

Das Rücksetzen der Ansteuerschaltung für eine weitere Entmagnetisierung erfolgt durch Wiederausschalten des Transistors T3. Der geladene Kondensator C6 wird dann allmählich durch den Widerstand R9 entladen. Nach Entladen des Kondensators C6 ist die Schaltung wieder für einen neuen Entmagnetisierungsvorgang bereit.

## Patentansprüche

1. Entmagnetisierungsschaltung, mit einem ersten und zweiten Versorgungsspannungsanschluß (AC1, AC2) zum Anlegen einer Versorgungswechselspannung, und mit einer zwischen dem ersten und zweiten Versorgungsspannungsanschluß (AC1, AC2) angeordneten Entmagnetisierungswicklung (R4),
**dadurch gekennzeichnet,**
**daß** zwischen dem ersten Versorgungsspannungsanschluß (AC1) und dem zweiten Versorgungsspannungsanschluß (AC2) ein erster Transistor (T1) und ein zweiter Transistor (T2) angeordnet sind, und
daß ein mit dem ersten Transistor (T1) und mit dem zweiten Transistor (T2) zu deren Ansteuerung über kapazitive Schaltungsmittel (C1-C4) verbundener Steueranschluß (ST) vorgesehen ist, an den die Versorgungswechselspannung in gleichgerichteter Form anzulegen ist.

2. Entmagnetisierungsschaltung nach Anspruch 1,
**dadurch gekennzeichnet,**
**daß** die kapazitiven Schaltungsmittel einen ersten kapazitiven Spannungsteiler (C1, C2) und einen zweiten kapazitiven Spannungsteiler (C3, C4) umfassen,
wobei der erste Transistor (T1) zwischen dem ersten Versorgungsspannungsanschluß (AC1) und einem ersten Ende des ersten kapazitiven Spannungsteilers (C1, C2) angeordnet ist und an dem ersten kapazitiven Spannungsteiler (C1, C2) eine Steuerspannung für den ersten Transistor abgegriffen ist, wobei der zweite Transistor (T2) zwischen dem zweiten Versorgungsspannungsanschluß (AC2) und einem ersten Ende des zweiten kapazitiven Spannungsteilers (C3, C4) angeordnet ist und an dem zweiten kapazitiven Spannungsteiler (C3, C4) eine Steuerspannung für den zweiten Transistor abgegriffen ist, und
wobei der erste kapazitive Spannungsteiler (C1, C2) und der zweite kapazitive Spannungsteiler (C3, C4) mit ihren zweiten Enden mit dem Steueranschluß (ST) verbunden sind.

3. Entmagnetisierungsschaltung nach Anspruch 2,
**dadurch gekennzeichnet,**
**daß** der erste und zweite Transistor (T1, T2) jeweils einen ersten Anschluß (D) und einen zweiten Anschluß (S), welche einen stromleitenden Pfad durch den jeweiligen Transistor definieren, sowie einen den Stromfluß durch den stromleitenden Pfad des jeweiligen Transistors steuernden dritten Anschluß (G) aufweisen,
daß der erste kapazitive Spannungsteiler (C1, C2) einen den Steueranschluß (G) und den zweiten Anschluß (S) des ersten Transistors (T1) verbindenden Kondensator (C1) und der zweite kapazitive Spannungsteiler (C3, C4) einen den dritten Anschluß (G) und den zweiten Anschluß (S) des zweiten Transistors (T2) verbindenden Kondensator (C3) umfaßt,
wobei der erste Transistor (T1) mit seinem ersten Anschluß (D) mit dem ersten Versorgungsspannungsanschluß (AC1) und der zweite Transistor (T2) mit seinem ersten Anschluß (D) mit dem zweiten Versorgungsspannungsanschluß (AC2) verbunden ist.

4. Entmagnetisierungsschaltung nach Anspruch 3,
**dadurch gekennzeichnet,**
**daß** der erste und zweite Transistor (T1, T2) ein MOS-Transistor ist, wobei der erste Anschluß durch den Drain-Anschluß (D), der zweite Anschluß durch den Source-Anschluß (S) und der dritte Anschluß (G) durch den Gate-Anschluß des jeweiligen Transistors (T1, T2) gebildet ist.

5. Entmagnetisierungsschaltung nach Anspruch 3,
**dadurch gekennzeichnet,**
**daß** der erste und zweite Transistor (T1, T2) ein Bipolar-Transistor ist, wobei der erste Anschluß durch den Kollektor, der zweite Anschluß durch den Emitter und der dritte Anschluß durch die Basis des jeweiligen Transistors (T1, T2) gebildet ist.

6. Entmagnetisierungsschaltung nach einem der Ansprüche 3-5,
**dadurch gekennzeichnet,**
**daß** parallel zu dem den dritten Anschluß (G) und den zweiten Anschluß (S) des ersten Transistors (T1) verbindenden Kondensator (C1) des ersten kapazitiven Spannungsteilers (C1, C2) sowie parallel zu dem den dritten Anschluß (G) und den zweiten Anschluß (S) des zweiten Transistors (T2) verbindenden Kondensator (C3) des zweiten kapazitiven Spannungsteilers (C3, C4) jeweils ein Entladungspfad (R1, R5; R2, R6) angeordnet ist.

7. Entmagnetisierungsschaltung nach Anspruch 1,
**dadurch gekennzeichnet,**
**daß** der erste und zweite Transistor (T1, T2) jeweils einen ersten Anschluß (D) und einen zweiten Anschluß (S), welche einen stromleitenden Pfad durch den jeweiligen Transistor definieren, sowie einen den Stromfluß durch den stromleitenden Pfad des jeweiligen Transistors steuernden dritten Anschluß (G) aufweisen, wobei die dritten Anschlüsse (G) sowie die zweiten Anschlüsse (S) der beiden Transistoren (T1, T2) jeweils miteinander verbunden sind und der erste Transistor (T1) mit seinem ersten Anschluß (D) mit dem ersten Versorgungsspannungsanschluß (AC1) verbunden ist, während der zweite Transistor (T2) mit seinem ersten Anschluß (D) mit dem zweiten Versorgungsspannungsanschluß (AC2) verbunden ist.

8. Entmagnetisierungsschaltung nach Anspruch 7,
**dadurch gekennzeichnet,**
**daß** die kapazitiven Schaltungsmittel einen kapazitiven Spannungsteiler (C1, C2) umfassen, welcher einen die dritten Anschlüsse (G) und die zweiten Anschlüsse (S) des ersten und zweiten Transistors (T1, T2) verbindenden Kondensator (C1) umfaßt.

9. Entmagnetisierungsschaltung nach Anspruch 8,
**dadurch gekennzeichnet,**
**daß** parallel zu dem die dritten Anschlüsse (G) und die zweiten Anschlüsse (S) des ersten und zweiten Transistors (T1, T2) verbindenden Kondensator (C1) des kapazitiven Spannungsteilers (C1, C2) ein Entladungspfad (R1) angeordnet ist.

10. Entmagnetisierungsschaltung nach einem der Ansprüche 7-9,
**dadurch gekennzeichnet,**
**daß** der erste und zweite Transistor (T1, T2) ein MOS-Transistor ist, wobei der erste Anschluß durch den Drain-Anschluß (D), der zweite Anschluß durch den Source-Anschluß (S) und der dritte Anschluß durch den Gate-Anschluß des jeweiligen Transistors (T1, T2) gebildet ist.

11. Entmagnetisierungsschaltung nach einem der vorhergehenden Ansprüche,
**dadurch gekennzeichnet,**
**daß** die kapazitiven Schaltungsmittel (C2, C6) mit einem dritten Transistor (T3) gekoppelt sind, an den eine Aktivierungsspannung zur Durchführung eines Entmagnetisierungsvorgangs anzulegen ist.

12. Entmagnetisierungsschaltung nach Anspruch 11,
**dadurch gekennzeichnet,**
**daß** der erste und zweite Transistor (T1, T2) jeweils einen ersten Anschluß (D) und einen zweiten Anschluß (S), welche einen stromleitenden Pfad durch den jeweiligen Transistor definieren, sowie einen den Stromfluß durch den stromleitenden Pfad des jeweiligen Transistors steuernden dritten Anschluß (G) aufweisen, wobei die dritten Anschlüsse (G) der beiden Transistoren (T1, T2) miteinander verbunden sind und der erste Transistor (T1) mit seinem ersten Anschluß (D) mit dem ersten Versorgungsspannungsanschluß (AC1) verbunden ist, während der zweite Transistor (T2) mit seinem ersten Anschluß (D) mit dem zweiten Versorgungsspannungsanschluß (AC2) verbunden ist, daß der dritte Transistor (T3) einen ersten Anschluß und
einen zweiten Anschluß, welche einen stromleitenden Pfad durch den dritten Transistor (T3) definieren, sowie einen den Stromfluß durch den stromleitenden Pfad des dritten Transistors (T3) steuernden dritten Anschluß (K2) aufweist, und
daß die kapazitiven Schaltungsmittel (C2, C6) zwischen die dritten Anschlüsse (G) des ersten und zweiten Transistors (T1, T2) und den ersten Anschluß des dritten Transistors (T3) geschaltet sind und die Aktivierungsspannung zur Durchführung eines Entmagnetisierungsvorgangs an den dritten Anschluß (K2) des dritten Transistors (T3) anzulegen ist.

13. Entmagnetisierungsschaltung nach Anspruch 12,
**dadurch gekennzeichnet,**
**daß** der dritte Transistor (T3) ein Kleinsignaltransistor ist, dessen Kollektor mit den dritten Anschlüssen (G) des ersten und zweiten Transistors (T1, T2) und dessen Emitter mit Masse verbunden ist, wobei die Aktivierungsspannung zur Durchführung eines Entmagnetisierungsvorgangs an die Basis (K2) des dritten Transistors (T3) anzulegen ist.

14. Entmagnetisierungsschaltung nach Anspruch 13,
**dadurch gekennzeichnet,**
**daß** der Kollektor des dritten Transistors (T3) über eine Kapazität (C6) und einem Spannungsteiler (R7,R8) mit dem Steueranschluß (ST) verbunden ist.

15. Entmagnetisierungsschaltung nach Anspruch 14,
**dadurch gekennzeichnet,**
**daß** zu der Kapazität (C6) ein Widerstand (R9) parallel geschaltet ist.

16. Entmagnetisierungsschaltung nach Anspruch 14 oder 15,
**dadurch gekennzeichnet,**
**daß** die kapazitiven Schaltungsmittel eine zwischen den Verbindungspunkt der dritten Anschlüsse (G) des ersten und zweiten Transistors (T1, T2) und dem Verbindungspunkt der Kapazität (C6) mit dem Spannungsteiler (R7, R8) geschaltete weitere Kapazität (C2) umfassen.

17. Entmagnetisierungsschaltung nach einem der vorhergehenden Ansprüche,
**dadurch gekennzeichnet,**
**daß** eine mit dem ersten und zweiten Versorgungsspannungsanschluß (AC1, AC2) verbundene Gleichrichterschaltung (BR) vorgesehen ist, wobei ein Ausgang der Gleichrichterschaltung (BR) mit dem Steueranschluß (ST) zum Zuführen der gleichgerichteten Versorgungswechselspannung verbunden ist.

18. Entmagnetisierungsschaltung nach Anspruch 17,
**dadurch gekennzeichnet,**
**daß** eine Kapazität (C5) vorgesehen ist, welche mit ihrem einen Ende mit dem Ausgang der Gleichrichterschaltung (BR) und somit auch mit dem Steueranschluß (ST) und den kapazitiven Schaltungsmitteln (C2-C4) und mit ihrem anderen Ende mit Masse verbunden ist.

19. Entmagnetisierungsschaltung nach Anspruch 18,
**dadurch gekennzeichnet,**
**daß** die Kapazität (C5) durch einen Elektrolytkondensator (C5) gebildet ist.

20. Entmagnetisierungsschaltung nach Anspruch 18 und 19,
**dadurch gekennzeichnet,**
**daß** die Gleichrichterschaltung (BR) und die Kapazität (C5) Bestandteil eines an die Entmagnetisierungsschaltung anzuschließenden Spannungsnetzteils sind.
